# EUROPÄISCHE PATENTSCHRIFT

(11) **EP 1 022 478 B1**
(45) Veröffentlichungstag und Bekanntmachung des Hinweises auf die Patenterteilung: **01.12.2004**
(21) Anmeldenummer: 99125170.3
(22) Anmeldetag: 17.12.1999
(51) Int. Cl.: F16C 29/06, F16C 33/30

(54) **Linearbewegungsführung**
Linear motion guide with rolling members
Guidage linéaire à éléments roulants

(30) Priorität: 19.01.1999 CH 9499; 06.05.1999 CH 85399
(43) Veröffentlichungstag der Anmeldung: 26.07.2000
(73) Patentinhaber: Schneeberger Holding AG, 4914 Roggwil (CH)
(72) Erfinder: Michaelsen, Georg, 4919 Roggwil (CH); Kunz, Stephan, 6262 Langnau (CH); Michel, Martin, 3007 Bern (CH)
(74) Vertreter: EGLI-EUROPEAN PATENT ATTORNEYS

(56) Entgegenhaltungen:
- EP-A- 0 296 291
- EP-A- 0 794 343
- WO-A-94/15109
- WO-A-98/21494
- FR-A- 2 755 733
- US-A- 5 076 713
- PATENT ABSTRACTS OF JAPAN vol. 99, no. 3, 31. März 1999 (1999-03-31) & JP 10 325414 A (NIPPON SEIKO), 8. Dezember 1998 (1998-12-08)
- PATENT ABSTRACTS OF JAPAN vol. 96, no. 7, 31. Juli 1996 (1996-07-31) & JP 08 061364 A (NIPPON THOMPSON), 8. März 1996 (1996-03-08)
- PATENT ABSTRACTS OF JAPAN vol. 97, no. 1, 31. Januar 1997 (1997-01-31) & JP 08 240223 A (KOYO SEIKO), 17. September 1996 (1996-09-17)
- PATENT ABSTRACTS OF JAPAN vol. 18, no. 164 (M-1579), 18. März 1994 (1994-03-18) & JP 05 332356 A (NTN), 14. Dezember 1993 (1993-12-14)

## Beschreibung

Die Erfindung betrifft eine Führungsvorrichtung, insbesondere zur Ausführung von Längsbewegungen, mit einem Umlaufkörper zur Anordnung an einer Führungsschiene, wobei der Umlaufkörper mit zumindest einem Wälzkörperumlauf versehen ist, jeder Wälzkörperumlauf einen Rücklaufkanal, eine Tragzone sowie zwei den Rücklaufkanal und die Tragzone miteinander verbindende Umlenkkanäle aufweist, der Umlaufkörper in jedem Wälzkörperumlauf mehrere Wälzkörper enthält und zur Führung der Wälzkörper im Wälzkörperumlauf mit Führungsmitteln versehen ist. Ausserdem betrifft die Erfindung einen Umlaufkörper gemäss dem Oberbegriff von Anspruch 11.

Derartige Wälzlagerlinearführungen werden in vielen Bereichen der Technik eingesetzt, in denen ein Bauteil gegenüber einem anderen Bauteil geradlinig und möglichst ohne Reibungsverluste bewegt werden soll. Die Einsatzumgebung kann die Umgebungsluft oder aber auch ein Reinraum oder Vakuum sein. Solche Führungen weisen als Führungskörper beispielsweise einen Wagen oder Schlitten auf, der über Wälzkörper, wie Kugeln, Rollen oder Nadeln, an einer Schiene geführt ist. Die Wälzkörper zirkulieren hierbei in zumindest einem in sich geschlossenen Wälzkörperumlauf des Wagens. Sie weisen üblicherweise eine Tragzone auf, in welcher die Wälzkörper an einer Tragfläche des Wagens und an der Schiene anliegen und hierdurch die zu bewegende Last tragen. Durch die Linearbewegung des Wagens gelangen die Wälzkörper aus der Tragzone in einen ersten Umlenkkanal, in dem die Wälzkörper von der Tragzone in den Rücklaufkanal überführt werden. Nach Durchlaufen des Rücklaufkanals erreichen die Wälzkörper über einen zweiten Umlenkkanal wieder die Tragzone.

Insbesondere, um den Verschleiss der Wälzkörper zu minimieren, und um die Laufruhe einer Linearführung zu verbessern, ist es bereits seit langem bekannt, die Flächen des Wagens, mit denen die Wälzkörper in Kontakt kommen, durch Kunststoffbauteile zu bilden. So wird beispielsweise in der DE 35 40 099 beschrieben, die Führungsflächen des Rücklaufkanals als gesondert hergestellte Hülsen vorzusehen, die später in entsprechende Ausnehmungen des metallischen Grundkörpers des Wagens eingefügt werden. Bei dieser Konstruktion kann als nachteilig empfunden werden, dass eine genaue Fertigung und eine sehr exakte und aufwendige Montage nötig ist.

Desweiteren wird in der DE 43 31 014 C2 beschrieben, Führungsmittel in den Tragzonen und den Rücklaufkanälen dadurch zu erzeugen, dass an den metallischen Grundkörper des Wagens die Führungsflächen in einem Kunststoffspritzverfahren direkt angespritzt werden. Ebenso wie bei dem zuvor erwähnten Wagen, ist aber auch bei diesem vorbekannten Wagen eine relativ aufwendige Schmiermittelversorgung erforderlich. Diese sieht vor, von aussen ins Innere des Wagens ein Schmiermittel zur Schmierung der üblicherweise metallischen Wälzkörper zuzuführen. Hiermit soll der Verschleiss der Wälzkörper reduziert und damit die Lebensdauer der Führung verlängert werden. Die vorbekannten Schmiermittelversorgungen erhöhen jedoch den konstruktiven Aufwand und verteuern damit die Linearführung. Ausserdem kann ein Defekt der Schmiermittelversorgungen nicht ausgeschlossen werden, wodurch an der Maschine, in welcher die Linearführung eingesetzt wird, ein ganz erheblicher Schaden entstehen kann. Insoweit bildet die DE 43 31 014 C2 gemäss dem Oberbegriff von Anspruch 1 den nächstliegenden Stand der Technik.

Aus der US-A-5 076 713 ist ein Umlaufkörper bekannt, dessen Wälzkörper aus Kermaik bestehen.

Es hat sich zudem gezeigt, dass sich derartige vorbekannte Führungen für Reinraum- und/oder Vakuumanwendungen kaum eignen. Es kann nämlich nicht sichergestellt werden, dass die Linearführungen bei der Ausführung von Bewegungen störende Ausgasungen und Kleinstpartikel absondern.

Der Erfindung liegt deshalb die Aufgabe zugrunde, eine Führung zu schaffen, mit der die beschriebenen Nachteile des Standes der Technik vermieden werden können. Es soll insbesondere eine Linearführung geschaffen werden, die für einen Einsatz im Reinraum und/oder im Vakuum besser geeignet ist als die genannten vorbekannten Führungen.

Diese Aufgabe wird bei einer Führungsvorrichtung der eingangs genannten Art dadurch gelöst, dass zumindest ein Teil der Führungsmittel im Bereich von Laufflächen für die Wälzkörper eine gegenüber einem Grundmaterial der Führungsmittel reibungsvermindernde Beschichtung aufweisen, und zumindest einige der Wälzkörper mit einem keramischen Werkstoff versehen sind, wobei zumindest zwei unterschiedliche Sorten von Wälzkörpern vorhanden sind, wobei sich die beiden Sorten durch ihre Abmessungen und/oder ihre Werkstoffe unterscheiden. Die Aufgabe wird ausserdem durch die Merkmale von Patentanspruch 11 gelöst. Im Zusammenhang mit der Erfindung können selbstverständlich alle geometrischen Formen von Wälzkörpern wie Kugeln, Rollen, Nadeln etc. zum Einsatz kommen.

Im Rahmen der vorliegenden Erfindung hat es sich gezeigt, dass vor allem die bisher verwendeten Materialpaarungen von Wälzkörpern und Laufflächen sowie die Verwendung eines flüssigen, viskosen Schmiermittels für den Einsatz im Reinraum oder Vakuum nachteilig sind. Aufgrund der hohen Flächenpressungen zwischen den Wälzkörpern und den Laufflächen entstehen hier störende Abriebe. Ein weiteres Problem sind Ausgasungen, die zum einen von den Schmiermitteln und zum anderen von Kunststoffbauteilen stammen können. Es hat sich nun überraschenderweise gezeigt, dass mit reibungsvermindernden Beschichtungen (trockenschmierende Schichten) einerseits und abriebfesten Wälzkörpern andererseits Eigenschaften erzielt werden können, durch die sich derart aufgebaute Linearführungen für den genannten Einsatzbereich besser eignen. Dies kann sogar dann erreicht werden, wenn vorzugsweise auf flüssige bzw. viskose Schmiermittel verzichtet wird (schmiermittelfrei), wodurch die Gefahr von Ausgasungen auf ein Minimum zurückgeführt werden kann. Es hat sich gezeigt, dass trotzdem eine gute Standfestigkeit der Führung bei gleichzeitiger erheblicher Reduzierung von Abrieben und Ausgasungen erzielbar ist.

Es hat sich als günstig gezeigt, wenn als Keramik Siliziumnitrid (Si₃N₄) zum Einsatz kommt. Alternativ können auch andere Keramiken, wie beispielsweise ZrO₂ oder Al₂O₃ verwendet werden. Es können jedoch grundsätzlich alle Keramiken verwendet werden, welche den auftretenden Flächenpressungs- und Temperaturbelastungen standhalten, ohne nennenswerten Abrieb zu erzeugen. Die Anmelderin hat im Zusammenhang mit keramischen Wälzkörpern die Schweizer Patentanmeldung 1998 1388/98 hinterlegt, deren Offenbarungsgehalt hinsichtlich verwendbarer Werkstoffe und Aufbau derartiger Wälzkörper durch Bezugnahme vollständig aufgenommen wird.

Schliesslich hat es sich auch als vorteilhaft erwiesen, wenn die Führungsschiene der Linearführung zumindest im Bereich von Kontaktflächen, auf denen die Wälzkörper abrollen, ebenfalls mit einer reibungsvermindernden Beschichtung versehen sind. Hiermit lässt sich die Standfestigkeit der erfindungsgemässen Führung weiter erhöhen.

Um Ausgasungen so weit als möglich zu vermeiden, kann es zweckmässig sein, auf Kunststoffe zu verzichten. Die Führungsmittel können deshalb als Grundmaterial rostfreien Stahl aufweisen, auf den die Beschichtung aufgebracht wird. Es hat sich als vorteilhaft erwiesen, wenn die Beschichtung als Grundschicht Chrom, oder ein sich chemisch ähnlich wie Chrom verhaltendes Metall, beispielsweise Nickel, enthält. Auf die Chromschicht kann ein Festkörperschmierstoff aufgebracht sein. Es hat sich gezeigt, dass sich mit Molybdändisulfid eine besonders gute Anbindung (Verbindung) des Festkörperschmiermittels an die Grundschicht erzielen lässt. Es können jedoch auch andere Festkörperschmiermittel - gegebenenfalls auch ohne metallische Grundschicht - verwendet werden, beispielsweise PTFE (Polytetrafluorethylen).

Es hat sich als besonders bevorzugt erwiesen, dass Führungsmittel für die Wälzkörper und/oder Kontaktflächen der Schiene als Grundschicht ganz oder teilweise mit einer dünnen Hart-Chrom-Schicht mit molekularer Bindung zum Trägermaterial versehen sind. Die Dicke der Grundschicht sollte vorzugsweise einen Wert aus dem Bereich von 1 µm und 4 µm aufweisen. Besonders bevorzugt ist eine Schichtdicke von ca. 3 µm. Derartige Beschichtungen sind beispielsweise unter der Bezeichnung "Duralloy-matt" (Duralloy® ist eine eingetragene Marke der Duralloy AG, Härkingen, Schweiz) bekannt geworden und können galvanisch aufgebracht werden. Hierbei ist besonders vorteilhaft, wenn auch die Laufflächen der Führungsschiene mit einer derartigen reibungsmindernden Schicht versehen sind. Auf die Grundschicht sollte eine weitere Schicht mit einem Festkörperschmierstoff aufgetragen sein. Als Festkörperschmierstoff eignet sich insbesondere MOS₂.

Weitere bevorzugte Ausgestaltungen der Erfindung ergeben sich aus den abhängigen Ansprüchen.

Die Erfindung wird anhand den in den Figuren schematisch dargestellten Ausführungsbeispielen näher erläutert; es zeigen:
- Fig. 1: eine erfindungsgemässe Linearführung in einer Querschnittsdarstellung;
- Fig. 2: eine perspektivische Darstellung von einem der in Fig. 1 gezeigten Umlaufkörper;
- Fig. 3: eine Querschnittsdarstellung des Umlaufkörpers aus Fig. 2.

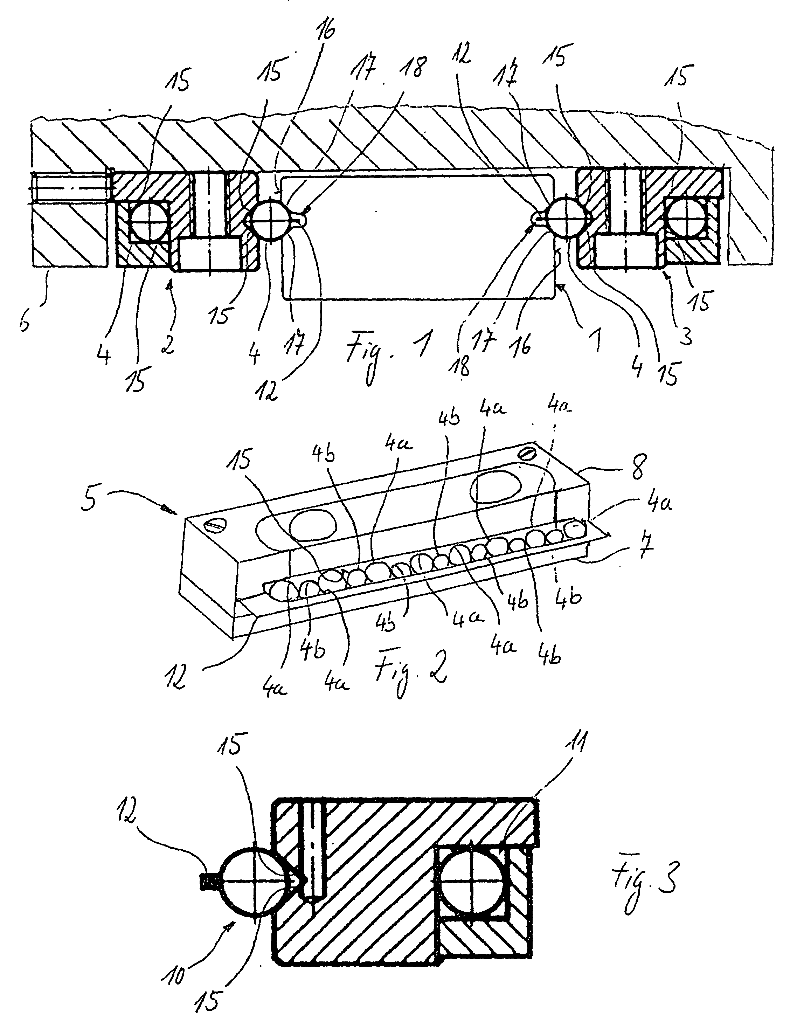

In Fig. 1 sind als Bestandteile einer erfindungsgemässen Linearführung eine profilierte Schiene 1 gezeigt, auf der sich zwei Umlaufkörper 2, 3 jeweils mit ihren Wälzkörpern 4 abstützen. Die beiden Umlaufkörper 2, 3 sind an einer linear zu bewegenden Last 6 befestigt. Derartige Linearführungen sind in bezug auf den grundsätzlichen konstruktiven Aufbau an sich vorbekannt. Nachfolgend wird deshalb im wesentlichen auf die prinzipielle geometrische Gestaltung sowie auf die verwendeten Werkstoffe eingegangen.

Die Fig. 2 und 3 zeigen einen der Umlaufkörper 2, 3. Wie den Darstellungen zu entnehmen ist, ist ein Grundkörper 5 des gezeigten Umlaufkörpers 2 im wesentlichen zweiteilig aufgebaut. Auf einer Grundplatte 7 ist eine Deckplatte 8 aufgeschraubt. Die beiden Bauteile bilden für die Zirkulation der Wälzkörper 4 zwischen sich einen Wälzkörperumlauf aus, der jeweils einen geradlinig verlaufenden Tragbereich 10 und einen Rücklaufkanal 11 aufweist. Der Tragbereich 10 und der Rücklaufkanal 11 sind parallel zueinander ausgerichtet. Diese beiden Abschnitte des Wälzkörperumlaufes sind an ihren Enden durch halbkreisförmig gekrümmte (nicht dargestellte) Umlenkkanäle miteinander verbunden. Insbesondere Fig. 3 zeigt, dass an die Grundplatte 7 ein Rückhaltesteg 12 angeformt ist, welcher den Tragbereich 10 überspannt und die Wälzkörper 4 vor einem Herausfallen aus dem Grundkörper 5 hindert. Als Führungsmittel sind im Tragbereich, Rücklaufsowie in den Umlenkkanälen Laufflächen 15 vorgesehen, mit denen die Wälzkörper Kontakt haben. Auf den Laufflächen 15 des Tragbereiches 10 wälzen sich die Wälzkörper zudem mit einer von der Last bedingten Flächenpressung ab.

Im gezeigten bevorzugten Ausführungsbeispiel bestehen die Grundplatte 7 und die Deckplatte 8 aus einem metallischen Grundmaterial, wie beispielsweise rostfreiem Stahl. Zumindest die Laufflächen 15 für die Wälzkörper, an denen die höchste Belastung auftritt, vorzugsweise jedoch sämtliche Laufflächen 15 des Grundkörpers 5, sind erfindungsgemäss mit einer Beschichtung versehen. Hierbei ist bevorzugt, wenn die vorzugsweise zumindest zu einem Teil galvanisch aufgebrachte Beschichtung eine Grundschicht aufweist. Diese kann beispielsweise überwiegend Chrom enthalten. Durch ein galvanisches Verfahren, wie es im deutschen Patent DE 25 02 284 beschrieben ist, kann eine solche Grundschicht erzeugt werden. Auf die Grundschicht sollte eine zweite Schicht aufgetragen werden, die vorzugsweise überwiegend einen Festkörperschmierstoff enthält. Hierbei hat sich Molybdändisulfid (MoS₂) als besonders geeignet gezeigt. Zur Erzeugung dieser zweiten Schicht kann ein Sputter-Verfahren verwendet werden.

Um eine gute Haftung der zweiten Schicht auf der Grundschicht zu erzielen, sollte die galvanische Grundschicht eine Perl- oder Säulenstruktur mit Erhebungen und Vertiefungen ausbilden. Die Rautiefe dieser Struktur kann von ca. 1 µm bis ca. 6 µm, vorzugsweise ca. 2 µm, betragen. Ein Zentrumsabstand zwischen benachbarten Erhebungen kann von ca. 1 µm bis ca. 5 µm betragen. Der Festkörperschmierstoff setzt sich dann vor allem in den Vertiefungen ab. Soweit der Festkörperschmierstoff die Erhebungen der Grundschicht überragt, kann dieser durch eine kurze Einlaufphase der Linearführung verdichtet bzw. abgetragen werden. Die sich letztendlich ergebende Gesamtschicht kann vorzugsweise eine Dicke von ca. 1 µm bis_10 µm, vorzugsweise von ca. 2 µm bis ca. 6 µm, besonders bevorzugt von ca. 4 µm, betragen.

Im vorliegenden Ausführungsbeispiel sind die Wälzkörper 4 als Kugeln ausgebildet, wobei zwei unterschiedliche Kugelsorten 4a, 4b im Wälzkörperumlauf eingesetzt sind. Eine derste Kugelsorte 4a besteht mit Vorteil aus Keramik, nämlich Si₃N₄. Ebenso ist es möglich, die Wälzkörper nur teilweise - im Bereich ihrer Oberfläche - mit Keramik zu versehen. In diesem Fall kann ein Kern der Wälzkörper aus einem anderen Material, vorzugsweise einem metallischen Material, ausgebildet sein.

Nur die Kugeln 4a der ersten Sorte dienen als tragende Kugeln der Linearführung und übertragen die Last vom Grundkörper 5 auf die Schiene 1. Zwischen jeweils zwei Kugeln 4a der ersten Sorte ist jeweils eine Kugel 4b der zweiten Sorte angeordnet. Ein wesentlicher Unterschied zwischen den beiden Kugelsorten besteht darin, dass die Kugeln der erste Sorte eine grössere Härte als die Kugeln der zweiten Sorte aufweisen. Die Kugeln der zweiten Sorte können beispielsweise zumindest an ihrer Oberfläche den auch unter der Bezeichnung "Teflon®" bekannten Werkstoff PTFE (Polytetrafluorethylen) aufweisen. Weitere geeignete Werkstoffe für diese Kugeln sind, in Abhängigkeit des Werkstoffes der Kugeln der ersten Sorte, POM (Polyoxymethylen), Keramik, Stahl und mit einer reibungsvermindernden Schicht versehene Stahlkugeln. Die Kugeln 4b der zweiten Sorte können - in Abhängigkeit ihrer absoluten Masse - im Durchmesser vorzugsweise von 1 % bis 20 % kleiner als die Kugeln 4a der ersten Sorte sein. Die Kugeln 4b der zweiten Sorte dienen zur Verschleissverminderung der lasttragenden Kugeln 4a.

Die im Querschnitt in etwa rechteckige Schiene 1 ist an einem nicht näher dargestelltem Trägerobjekt angebracht. An ihren beiden vertikalen Seitenflächen 16 weist sie zwei auf gleicher Höhe angeordnete und parallel zueinander verlaufende Nuten gleichen Querschnittes. Durch jede Nut werden zwei ebene oder gekrümmte Kontaktflächen 17 ausgebildet, auf denen sich die lasttragenden Wälzkörper des Umlaufkörpers abwälzen und abstützen. Tangenten der Kontaktflächen 17 einer Nut an Berührungspunkten der Kugeln (an die Kontaktflächen) schliessen einen Winkel von ca. 90° ein. In einem Nutgrund ist eine Einkerbung 18 vorhanden, in der bei einer Bewegung von einem der Umlaufkörper entlang der Schiene 1 jeweils der Rückhaltesteg 12 angeordnet ist. Die Kontaktflächen 17 der vorzugweise rostfreien Stahl als Werkstoff aufweisenden Schiene 1 sind ebenfalls mit einer reibungsvermindernden Beschichtung, vorzugsweise mit der gleichen Beschichtung wie die Laufflächen 15 der Umlaufkörper 2, 3, versehen. Alternativ kann auch eine andere Beschichtung vorgesehen sein. Ebenso wie bei den Laufflächen 15 eignet sich hierzu auch ein spezielles Wolframdisulfid (WS₂), das ebenfalls als Trokken- bzw. Festkörperschmiermittel eingesetzt werden kann. Dieser Werkstoff sollte so vorbehandelt sein, dass er in seiner Gitterstruktur verzahnt ist. Er kann durch Beschuss (beispielsweise durch Sputtering) direkt auf metallische Oberflächen aufgebracht werden, wo er eine molekulare Bindung mit der Oberfläche eingeht und somit fest mit der Oberfläche des Grundkörpers verbunden ist.

## Patentansprüche

1. Führungsvorrichtung, insbesondere zur Ausführung von Längsbewegungen, mit einem Umlaufkörper (2, 3) zur Anordnung an einer Führungsschiene (1), wobei der Umlaufkörper (2, 3) mit zumindest einem Wälzkörperumlauf versehen ist, jeder Wälzkörperumlauf einen Rücklaufkanal (11), eine Tragzone (10) sowie zwei den Rücklaufkanal (11) und die Tragzone (10) miteinander verbindende Umlenkkanäle aufweist, der Umlaufkörper (2, 3) in jedem Wälzkörperumlauf mehrere Wälzkörper enthält und zur Führung der Wälzkörper im Wälzkörperumlauf mit Führungsmitteln (15) versehen ist, wobei zumindest ein Teil der Führungsmittel im Bereich von Laufflächen (15) für die Wälzkörper eine im Vergleich mit einem Grundmaterial der Führungsmittel reibungsvermindernde Beschichtung aufweisen, **dadurch gekennzeichnet, dass** zumindest einige der Wälzkörper mit einem keramischen Werkstoff versehen sind und dass zumindest zwei unterschiedliche Sorten von Wälzkörpern (4) vorhanden sind, wobei sich die beiden Sorten (4a, 4b) durch ihre Abmessungen und/oder ihre Werkstoffe unterscheiden.

2. Führungsvorrichtung nach Anspruch 1, **dadurch gekennzeichnet, dass** eine Sorte der Wälzkörper PTFE, POM, Keramik oder beschichteten Stahl aufweist.

3. Führungsvorrichtung nach einem der Ansprüche 1 oder 2, **dadurch gekennzeichnet, dass** jeweils zwischen zwei Wälzkörpern der ersten Sorte (4a) zumindest ein Wälzkörper der zweiten Sorte (4a) angeordnet ist.

4. Führungsvorrichtung nach einem der vorhergehenden Ansprüche, **dadurch gekennzeichnet, dass** die Beschichtung einen Trockenschmierstoff enthält.

5. Führungsvorrichtung nach einem der vorhergehenden Ansprüche, **dadurch gekennzeichnet, dass** die Beschichtung zweilagig ist und zumindest ein Teil von zumindest einer der beiden Schichten einen Festkörperschmierstoff aufweist.

6. Führungsvorrichtung nach Anspruch 5, **dadurch gekennzeichnet, dass** die Beschichtung Chrom und Molybdändisulfid (MoS₂) aufweist.

7. Führungsvorrichtung nach einem der vorhergehenden Ansprüche, **dadurch gekennzeichnet, dass** die Führungsschiene (1) zumindest im Bereich von Kontaktflächen (17) für die Wälzkörper (4) mit einer reibungsvermindernden Beschichtung versehen ist.

8. Führungsvorrichtung nach Anspruch 7, **dadurch gekennzeichnet, dass** die Führungsschiene (1) die gleiche Beschichtung wie die Führungsmittel aufweist.

9. Führungsvorrichtung nach einem der vorhergehenden Ansprüche, **dadurch gekennzeichnet dass** jeweils zwei lasttragende Wälzkörper durch jeweils einen Abstandshalter voneinander beabstandet sind.

10. Führungsvorrichtung nach einem der vorhergehenden Ansprüche, **dadurch gekennzeichnet, dass** zur Schmierung der Wälzkörper ausschliesslich die im Wälzkörperumlauf vorhandenen trockenschmierende Stoffe vorgesehen sind.

11. Umlaufkörper (2, 3) einer Führung zur Anordnung an einer Schiene (1), welcher mit zumindest einem Wälzkörperumlauf versehen ist, jeder Wälzkörperumlauf einen Rücklaufkanal (11), eine Tragzone (10) sowie zwei den Rücklaufkanal (11) und die Tragzone (10) miteinander verbindende Umlenkkanäle aufweist, in jedem Wälzkörperumlauf mehrere Wälzkörper enthalten sind, die zur Zirkulation im Wälzkörperumlauf vorgesehen sind, und der Umlaufkörper (2, 3) zur Führung der Wälzkörper im Wälzkörperumlauf mit Führungsmitteln versehen ist, wobei zumindest ein Teil der Führungsmittel im Bereich von Laufflächen (15) für die Wälzkörper eine im Vergleich mit einem Grundmaterial der Führungsmittel reibungsvermindernde Beschichtung aufweisen, **dadurch gekennzeichnet, dass** zumindest einige der Wälzkörper mit einen keramischen Werkstoff versehen sind, wobei zumindest zwei unterschiedliche Sorten von Wälzkörpern (4) vorhanden sind und sich die beiden Sorten (4a, 4b) durch ihre Abmessungen und/oder ihre Werkstoffe unterscheiden.

## Claims

1. A guiding device, particularly for carrying out longitudinal movements, with a circulation member (2, 3) for being arranged on a guide rail (1), wherein the circulation member (2, 3) is provided with at least one rolling member circulation, wherein each rolling member circulation comprises a return channel (11), a support zone (10) as well as two deflection channels that connect the return channel (11) and the support zone (10) to one another, wherein the circulation member (2, 3) comprises several rolling members in each rolling member circulation and is provided with guide means (15) for guiding the rolling members in the rolling member circulation, and wherein at least part of the guide means is provided with a coating that reduces the friction in comparison with the base material of the guide means in the region of the running surfaces (15) for the rolling members, **characterized in that** at least some of the rolling members are provided with a ceramic material, and **in that** at least two different types of rolling members (4) are provided, wherein the two types (4a, 4b) of rolling members differ with respect to their dimensions and/or their materials.

2. The guiding device according to Claim 1, **characterized in that** one type of rolling members contains PTFE, POM, ceramic or coated steel.

3. The guiding device according to Claim 1 or 2, **characterized in that** at least one rolling member of the second type (4a) is respectively arranged between two rolling members of the first type (4a).

4. The guiding device according to one of the preceding claims, **characterized in that** the coating contains a dry lubricant.

5. The guiding device according to one of the preceding claims, **characterized in that** the coating comprises two layers and at least part of at least one of the two layers contains a solid lubricant.

6. The guiding device according to Claim 5, **characterized in that** the coating comprises chrome or molybdenum sulfide (MoS₂).

7. The guiding device according to one of the preceding claims, **characterized in that** the guide rail (1) is provided with a friction-reducing coating at least in the region of contact surfaces (17) for the rolling members (4).

8. The guiding device according to Claim 7, **characterized in that** the guide rail (1) is provided with the same coating as the guide means.

9. The guiding device according to one of the preceding claims, **characterized in that** two load-bearing rolling members are respectively spaced apart from one another by a spacer.

10. The guiding device according to one of the preceding claims, **characterized in that** the lubrication of the rolling members is exclusively realized with the dry-lubricating substances in the rolling member circulation.

11. A circulation member (2, 3) for guiding an arrangement on a rail (1), wherein said circulation member is provided with at least one rolling member circulation, wherein each rolling member circulation comprises a return channel (11), a support zone (10) as well as two deflection channels that connect the return channel (11) and the support zone (10) to one another, wherein each rolling member circulation contains several rolling members that are provided for the circulation in the rolling member circulation, wherein the circulation member (2, 3) is provided with guide means for guiding the rolling members in the rolling member circulation, and wherein at least part of the guide means is provided with a coating that reduces the friction in comparison with the base material of the guide means in the region of the running surfaces (15) for the rolling members, **characterized in that** at least a few of the rolling members are provided with a ceramic material, wherein at least two different types of rolling members (4) are provided and the two types (4a, 4b) differ with respect to their dimensions and/or their materials.

## Revendications

1. Dispositif de guidage, notamment pour effectuer des mouvements longitudinaux, comportant un corps périphérique (2,3) pour l'agencement sur un rail de guidage (1), dans lequel le corps périphérique (2,3) est pourvu d'au moins une périphérie de corps de roulement, chaque périphérie de corps de roulement présente un canal de retour (11), une zone portante (10) ainsi que deux canaux de déviation reliant mutuellement le canal de retour (11) et la zone portante (10), le corps périphérique (2,3) comprend plusieurs corps de roulement dans chaque périphérie de corps de roulement et est pourvu de moyens de guidage (15) pour le guidage des corps de roulement dans la périphérie de corps de roulement, au moins une partie des moyens de guidage comprenant au niveau de zones de marche (15) pour les corps de roulement une stratification réduisant la friction par rapport à un matériau brut des moyens de guidage, **caractérisé en ce qu'**au moins quelques corps de roulement sont pourvus d'un matériau céramique et **en ce qu'**au moins deux sortes différentes de corps de roulement (4) sont présentes, les deux sortes (4a,4b) se différenciant par leurs dimensions et/ou leurs matériaux.

2. Dispositif de guidage selon la revendication 1, **caractérisé en ce qu'**une sorte des corps de roulement comprend du PTFE, POM, de la céramique ou de l'acier stratifié.

3. Dispositif de guidage selon l'une des revendications 1 et 2, **caractérisé en ce qu'**au moins un corps de roulement de la deuxième sorte (4a) est respectivement disposé entre deux corps de roulement de la première sorte (4b).

4. Dispositif de guidage selon l'une des revendications précédentes, **caractérisé en ce que** la stratification comprend un lubrifiant sec.

5. Dispositif de guidage selon l'une des revendications précédentes, **caractérisé en ce que** la stratification est en deux couches et au moins une partie d'au moins une des deux couches comprend un lubrifiant solide.

6. Dispositif de guidage selon la revendication 5, **caractérisé en ce que** la stratification comprend du chrome et du bisulfure de molybdène (MoS₂).

7. Dispositif de guidage selon l'une des revendications précédentes, **caractérisé en ce que** le rail de guidage (1) est pourvu au moins au niveau des zones de contact (17) pour les corps de roulement (4) d'une stratification réduisant la friction.

8. Dispositif de guidage selon la revendication 7, **caractérisé en ce que** le rail de guidage (1) comprend la même stratification que les moyens de guidage.

9. Dispositif de guidage selon l'une des revendications précédentes, **caractérisé en ce que** respectivement deux corps de roulement porteurs de charge sont espacés respectivement l'un de l'autre par un espaceur.

10. Dispositif de guidage selon l'une des revendications précédentes, **caractérisé en ce que**, pour la lubrification des corps de roulement, seules les matières lubrifiantes sèches présente dans la périphérie de corps de roulement sont prévues.

11. Corps périphérique (2,3) d'un dispositif de guidage pour l'agencement sur un rail (1), lequel est pourvu d'au moins deux périphéries de corps de roulement, chaque périphérie de corps de roulement comprenant un canal de retour (11), une zone portante (10) ainsi que deux canaux de déviation reliant mutuellement le canal de retour (11) et la zone portante (10), laquelle périphérie de corps de roulement comprend plusieurs corps de roulement, qui sont prévus pour la circulation dans la périphérie de corps de roulement, et le corps périphérique (2,3) est pourvu de moyens de guidage pour le guidage des corps de roulement dans la périphérie de corps de roulement, au moins une partie des moyens de guidage comprenant au niveau de zones de marche (15) des corps de roulement une stratification réduisant la friction par rapport à un matériau brut des moyens de guidage, **caractérisé en ce qu'**au moins quelques corps de roulement sont pourvus d'un matériau céramique, au moins deux sortes différentes de corps de roulement (4) étant présentes et les deux sortes (4a,4b) se différenciant l'une de l'autre par leurs dimensions et/ou leur matériaux.
